# DEMANDE DE BREVET EUROPEEN

(11) **EP 1 892 130 A1**
(43) Date de publication de la demande: **27.02.2008**
(21) Numéro de dépôt: 07301296.5
(22) Date de dépôt: 07.08.2007
(51) Int. Cl.: B60G 15/06, F16F 9/54, F16F 1/373

(54) **Dispositif de fixation supérieure d'un amortisseur de suspension sur la caisse d'un véhicule**

(30) Priorité: 25.08.2006 FR 0653462
(71) Demandeur: PEUGEOT CITROËN AUTOMOBILES SA, 78140 Vélizy Villacoublay (FR)
(72) Inventeur: Pelcot, Alain, 95250 Beauchamp (FR)

(57) **Abrégé**

L'invention concerne un dispositif de fixation d'un amortisseur de suspension (2) sur la caisse (1) d'un véhicule, comprenant une bride (3,4,5,6) fixée à l'extrémité supérieure de l'amortisseur (2) qui comprend un corps (60) destinée à s'engager partiellement dans une ouverture (10) ménagée dans la caisse (1) et un rebord de butée inférieure (61) destiné à venir en appui contre la face inférieure (11) de la caisse (1) bordant ladite ouverture (10), et un organe de blocage (7) amovible et apte à coopérer avec ledit corps (60) pour maintenir fixe la bride (3,4,5,6) sur la caisse (1) en venant en appui contre la face supérieure (12) de la caisse (1) bordant l'ouverture (10). Selon l'invention, cet organe de blocage (7) comprend une couronne (70) sur laquelle est ménagée une fente (73) adaptée pour permettre le montage de l'organe de blocage (7) dans un plan transversal à l'amortisseur.

L'invention trouve application dans la fixation des amortisseurs de roues directrices dans une suspension de type Mac Pherson.

## Description

La présente invention concerne un dispositif de fixation supérieure d'un amortisseur de suspension sur la caisse d'un véhicule automobile.

Elle concerne plus particulièrement un dispositif de fixation d'un amortisseur de suspension d'une roue directrice dans une suspension de type Mac Pherson.

Les dispositifs de fixation supérieure d'un amortisseur de suspension avant comportent généralement :
- une armature intérieure mobile à surface latérale de révolution, cette armature étant pourvue d'une part d'un appui et d'un moyen de fixation pour l'extrémité supérieure de l'amortisseur de suspension, d'autre part de moyens de limitation des débattements axiaux dans les deux directions ;
- une armature extérieure propre à être fixée sur la caisse du véhicule, et dont la face inférieure est en contact axial et radial avec une butée à billes reposant sur le ressort de l'amortisseur de suspension, cette armature ayant en outre une surface latérale qui entoure celle de l'armature intérieure ;
- une masse de matériau élastique, notamment de matériau élastomère, reliant les deux armatures entre elles, ladite masse étant adhérisée pour l'essentiel sur la surface interne de ladite armature extérieure, entre celle-ci et la surface externe de ladite armature intérieure.

L'armature intérieure est généralement constituée de deux coupelles, respectivement supérieure et inférieure, opposées par leurs fonds, ces fonds étant solidarisées l'un à l'autre par le moyen de fixation de l'extrémité supérieure de l'amortisseur.

L'amortissement des mouvements axiaux de l'amortisseur est assuré d'une part par la coupelle supérieure et une partie de la masse située en regard et à faible distance au-dessous de celle-ci en détente, et d'autre part par la coupelle inférieure et une autre partie de la masse située en regard et à faible distance au-dessus de celle-ci en attaque.

Pour assurer la fixation de l'amortisseur sur la caisse du véhicule, il est connu de :
- amener par-dessous l'ensemble formé de l'amortisseur et de son dispositif de fixation à travers une ouverture ménagée sur la caisse, de sorte que l'armature extérieure vienne en butée contre la paroi inférieure de ladite caisse ; et
- fixer ladite armature extérieure sur ladite caisse par un système à vis et écrou.

Le vissage des écrous sur les vis correspondantes s'effectue par-dessus, c'est-à-dire du côté de la paroi supérieure de la caisse opposée aux roues ; la tête de la vis étant disposée sur la face inférieure de l'armature extérieure.

Cette opération est généralement effectuée par un opérateur sur une ligne de montage, et pose généralement des problèmes de centrage de l'amortisseur car elle est souvent effectuée en aveugle. De plus, cette opération est physiquement difficile et longue pour un opérateur, notamment à cause d'un environnement encombré autour de la zone de fixation. En effet, sur certains véhicules, le pare-brise est positionné au-dessus du dispositif de fixation de l'amortisseur, de sorte qu'il est très compliqué d'effectuer l'opération de vissage de l'armature extérieure.

En outre, de tels dispositifs de fixation soulèvent des problèmes similaires lors du démontage de l'amortisseur, l'ensemble vis et écrou de fixation de l'armature extérieure étant difficile d'accès.

Il est également connu du document US 6 290 218 B1 un dispositif de fixation d'un amortisseur de suspension sur la caisse d'un véhicule qui utilise un anneau de sécurité bloquant une extrémité de l'amortisseur saillante à travers une ouverture ménagée dans la caisse. Cet anneau de sécurité est formé de deux demi anneaux emboîtés l'un dans l'autre à chacune de leurs extrémités. Cette solution pose des problèmes de montage car il nécessite que l'opérateur fasse coopérer les deux demi anneaux, en les emboîtant l'un dans l'autre, ce qui peut s'avérer problématique dans un environnement encombré où l'opérateur peut difficilement faire passer ses mains ou un outillage adéquat.

L'invention vise à pallier ces inconvénients en proposant un dispositif de fixation de l'amortisseur facile à monter et à démonter, également peu coûteux en utilisant un nombre réduit de pièces.

A cet effet, elle propose un dispositif de fixation d'un amortisseur de suspension sur la caisse d'un véhicule, comprenant une bride fixée à l'extrémité supérieure de l'amortisseur qui comprend un corps destinée à s'engager partiellement dans une ouverture ménagée dans la caisse et un rebord de butée inférieure destiné à venir en appui contre la face inférieure de la caisse bordant ladite ouverture, et un organe de blocage amovible et apte à coopérer avec ledit corps pour maintenir fixe la bride sur la caisse en venant en appui contre la face supérieure de la caisse bordant l'ouverture. Selon l'invention, l'organe de blocage comprend une couronne sur laquelle est ménagée une fente adaptée pour permettre le montage de l'organe de blocage dans un plan transversal à l'amortisseur.

L'organe de blocage est élastiquement déformable, de sorte que lors de son montage, la fente s'écarte pour permettre à la couronne de s'engager autour du corps de la bride. La fente s'écarte lorsqu'elle vient en appui contre le corps de la bride, l'effort d'engagement de l'organe de blocage dans le plan transversal étant maintenu pour que la couronne vienne entourer ledit corps de bride. A la fin, la fente retrouve sa position d'avant montage.

La présente invention concerne également les caractéristiques ci après :
- la bride comporte un rebord de butée supérieure saillant vers l'extérieur du corps, l'organe de blocage étant destiné à être interposé entre ledit rebord de butée supérieure et la face supérieure de la caisse ;
- la bride comporte une armature intérieure fixée à l'extrémité supérieure de l'amortisseur et une armature extérieure reliée à l'armature intérieure et ayant une surface latérale qui entoure l'armature intérieure, l'armature extérieure comprenant un organe de fixation, ledit organe de fixation comportant le corps de forme cylindrique terminée à l'une de ses extrémités par le rebord de butée inférieure saillant vers l'extérieur dudit corps.

Dans une réalisation particulière, le rebord de butée inférieure comprend une partie plane destinée à venir en appui sur la face inférieure de la caisse et une partie bombée destinée à assurer le positionnement de la bride par rapport à l'ouverture de la caisse.

Avantageusement, la partie bombée du rebord de butée inférieure vient en butée contre une paroi de la caisse de forme complémentaire, par l'intermédiaire d'une masse en matériau élastique ; la partie bombée du rebord de butée inférieure présentant préférentiellement une section transversale de forme générale circulaire ou ellipsoïdale ou pyramidale à n côtés.

Afin de faciliter le montage de l'amortisseur, le rebord de butée supérieure de la bride est solidaire d'une couronne en matériau présentant une qualité de revêtement glissant ; ladite couronne recouvrant avantageusement le rebord de butée supérieure de la coupelle de fixation par surmoulage.

De plus, afin d'assurer un blocage sans jeu de l'organe de fixation, l'organe de blocage est partiellement couvert d'un revêtement en matériau élastique.

Pour le cas où l'amortisseur n'est pas centré sur l'ouverture pratiquée dans la caisse, ledit organe de blocage comprend au moins une patte en saillie radiale sur la périphérie extérieure de la couronne, afin de venir en appui sur la face supérieure de la caisse, quelque soit la position de l'amortisseur par rapport à l'ouverture.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 représente une coupe axiale du dispositif de fixation d'un amortisseur de suspension selon l'invention ;
- la figure 2 représente en coupe axiale un détail du dispositif de fixation représenté en figure 1 ;
- la figure 3 est une vue en perspective de dessus du dispositif de fixation avant montage ;
- la figure 4 est une vue identique à celle de la figure 3 du dispositif de fixation après montage.

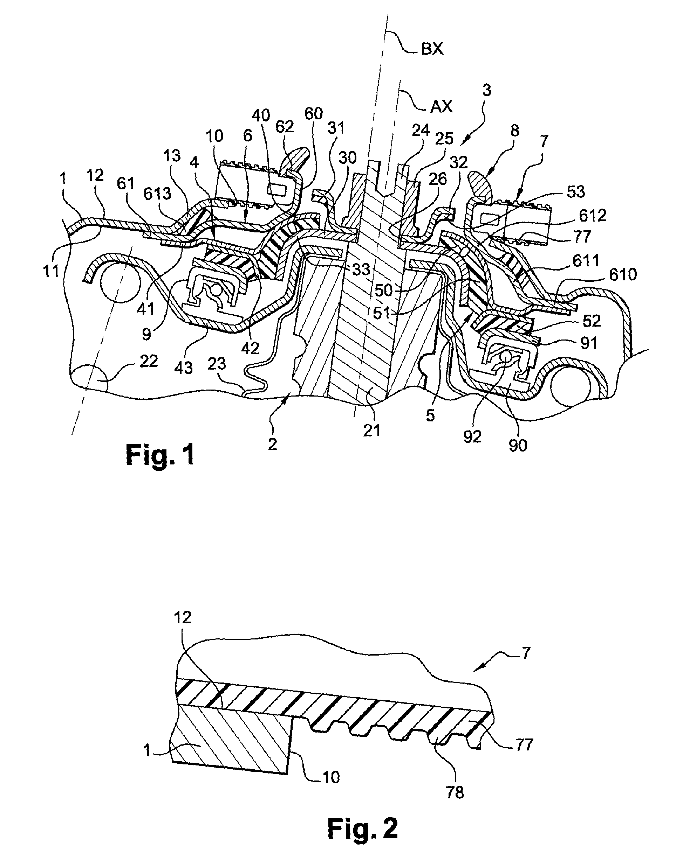

Sur la figure 1, la caisse du véhicule est schématisée par la tôle 1.

L'amortisseur de suspension 2 est relié par son extrémité inférieure à la roue du véhicule, notamment par une rotule non représentée, et l'extrémité supérieure de cet amortisseur 2 est reliée à la caisse 1 du véhicule par un dispositif de fixation conforme à l'invention.

L'amortisseur 2 est composé d'un corps (non représenté), d'une tige 21 déplaçable en translation à l'intérieur de ce corps, et d'un ressort 22 à spires monté concentrique autour du corps. La tige 21 de l'amortisseur 2 est protégée par un soufflet 23.

Le ressort 22 présente une spire supérieure en butée sur le dispositif de fixation, et la spire inférieure non représentée est en appui sur une coupelle solidaire du corps de l'amortisseur 2.

Le dispositif de fixation comprend une bride fixée à l'extrémité supérieure de l'amortisseur 2. Cette bride comprend :
- une armature intérieure 3 fixée à l'extrémité supérieure de l'amortisseur 2, et plus particulièrement à l'extrémité supérieure de la tige 21 dudit amortisseur 2 ;
- une armature extérieure 4 reliée à l'armature intérieure 3, ayant une surface latérale qui entoure l'armature intérieure 3 et qui est fixée à la caisse 1 du véhicule.

L'armature intérieure 3 de la bride est constituée de deux coupelles, respectivement inférieure 30 et supérieure 31, opposées par leurs fonds. Ces fonds sont traversés par l'extrémité filetée 24 de la tige 21 de l'amortisseur 2 ; le serrage des deux coupelles 30, 31 l'une sur l'autre et la fixation de ladite armature intérieure 3 sur l'amortisseur 2 sont assurés par un écrou 25 vissé sur l'extrémité filetée 24 de la tige 21, contenu par la coupelle supérieure 31 et donc accessible par le haut. Le serrage de l'écrou 25 sur la tige filetée 21 est préférentiellement réalisée avant le montage de l'amortisseur sur la caisse du véhicule. L'extrémité supérieure de la tige 21 présente un épaulement 26 en appui sur le fond de la coupelle inférieure 30.

La coupelle supérieure 31 comporte une paroi latérale bombée ou cylindrique terminée par un rebord de butée 32 saillant radialement vers l'extérieur de ladite coupelle 30 sur toute la périphérie de celle-ci. Ce rebord 32 fait face à la coupelle inférieure 30. La coupelle inférieure 30 possède une surface latérale de révolution 33, de forme bombée ou cylindrique.

L'armature extérieure 4 comporte une coupelle 40 renversée, dite coupelle extérieure, dont le fond est ouvert et laisse le passage à la coupelle supérieure 31 de l'armature intérieure 3. La surface latérale de la coupelle extérieure 40 est de forme préférentiellement bombée et entoure la surface latérale 33 de la coupelle inférieure 30.

La coupelle extérieure 40 comporte un rebord inférieur 41 saillant radialement vers l'extérieur de ladite coupelle 40 sur toute la périphérie de celle-ci.

L'armature extérieure 4 comporte également des moyens de liaison entre le ressort 22 et la coupelle extérieure 40. Ces moyens comprennent une coupelle d'appui 42 solidaire de la face inférieure du rebord inférieur 41 et destiné à venir en contact axial et radial avec une butée à billes ou tournante 9 reposant sur le ressort 22 de l'amortisseur de suspension 2.

La bride du dispositif de fixation comporte une masse ou revêtement en matériau élastique 5, préférentiellement en matériau élastomère, solidarisé ou adhérisé pour l'essentiel sur la surface interne de l'armature extérieure 4, entre celle-ci et la surface externe de l'armature intérieure 3. Cette masse 5 présente :
- un voile relativement peu épais 50 constituant une attache souple reliant les deux armatures 3, 4, et plus particulièrement reliant la face interne de la coupelle extérieure 40 et la face externe de la coupelle inférieure 30, ce voile 50 étant particulièrement destiné à amortir les mouvements axiaux en attaque ;
- une partie principale 51 interposée entre ladite surface interne de l'armature extérieure 4 et ladite surface externe de l'armature intérieure 3, et plus particulièrement interposé entre les coupelles extérieure 40 et inférieure 30 ;
- une partie secondaire 52 séparée de la partie principale 51 par la coupelle d'appui 42 et s'étendant entre ladite coupelle d'appui et la butée à billes 9 ; et
- un talon de butée 53 solidaire de la face inférieure du rebord de butée 32 de la coupelle supérieure 31 en regard de la coupelle inférieure 30, ou solidaire de la face supérieure de ladite coupelle inférieure 30 en regard dudit rebord de butée 32, ledit talon 53 étant destiné à amortir les mouvements axiaux en rebond.

La butée à billes 9 comporte deux parties annulaires, respectivement inférieure 90 et supérieure 91, qui forment entre elles un logement annulaire pour des billes 92. La partie annulaire supérieure 91 prend appui sur la partie secondaire 52 de la masse élastomère 5. La partie annulaire inférieure 90 prend appui sur la face supérieure d'une surface 43. Cette surface 43 présente une face inférieure en appui sur la spire supérieure du ressort 22 et l'amortisseur 2.

L'armature extérieure 4 de la bride comprend un organe de fixation 6, en forme générale de coupelle, solidaire de la coupelle extérieure 40 et destinée à être fixée sur la caisse 1 du véhicule. Cet organe de fixation 6 comporte un corps 60, formée d'une paroi latérale cylindrique, terminé à chacune de ses extrémités par un rebord de butée, respectivement inférieure 61 et supérieure 62, saillant vers l'extérieur dudit corps 60. Le corps 60 présente une section transversale de forme générale non limitative circulaire.

La coupelle de fixation 6 peut soit venir de matière avec la coupelle extérieure 40 soit être solidarisée à ladite coupelle extérieure 40 par fixation, par exemple par soudure, du rebord de butée inférieure 61 sur ladite coupelle extérieure 40.

Le corps 60 de la coupelle de fixation 6 entoure la coupelle supérieure 31 de l'armature intérieure 3. Ce corps 60 est destiné à s'engager partiellement à travers une ouverture 10 pratiquée dans la caisse 1.

Le rebord de butée inférieure 61 est destiné à venir en appui sur la face inférieure 11 de la caisse 1. Quand ledit rebord de butée inférieure 61 est en butée sur la caisse 1, Le corps 60 dépasse partiellement de l'ouverture 10 de la caisse 1 ; l'amortisseur 2 étant amené par-dessous la caisse 1 avant son assemblage sur ladite caisse 1 au moyen du dispositif de fixation.

Le dispositif de fixation comprend un organe de blocage 7 amovible destiné à maintenir fixe la bride sur la caisse 1 en :
- coopérant avec le corps 60 de la coupelle de fixation 6 en saillie de l'ouverture 10 ; et en
- venant en appui contre la face supérieure 12 de la caisse 1.

Selon un mode de réalisation préféré, l'organe de blocage 7 est interposé entre le rebord de butée supérieure 62 et la face supérieure 12 de la caisse 1 pour bloquer la coupelle de fixation 6 (et donc la bride) en translation. Dans ce mode de réalisation, l'organe de blocage 7 est préférentiellement un organe formant circlips.

De la sorte, l'amortisseur 2 est fixé sur la caisse 1 au moyen de la coupelle de fixation 6 et de l'organe formant circlips 7, ladite coupelle de fixation 6 étant un élément de l'armature extérieure 4 de la bride bloqué entre les deux points d'appui suivants :
- le point d'appui supérieur entre la face supérieure 12 de la caisse 1 et le rebord de butée supérieure 62, via l'organe formant circlips 7 ; et
- le point d'appui inférieur entre la face inférieure 11 de la caisse 1 et le rebord de butée inférieure 61.

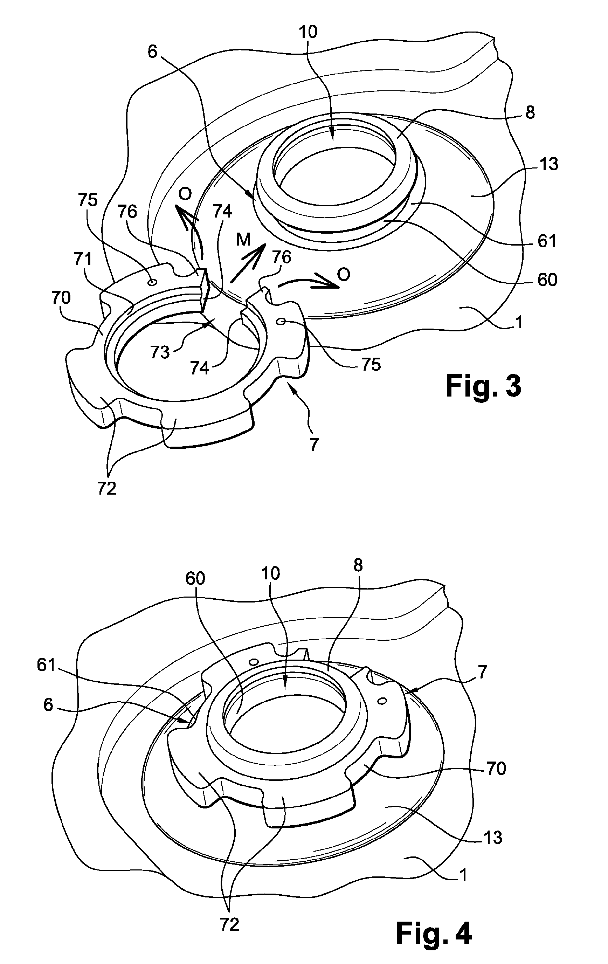

L'organe formant circlips 7 est en matériau élastique ou semi-flexible et comporte :
- une couronne 70 de forme générale cylindrique, présentant un épaulement 71 sur sa périphérie intérieure ;
- au moins une patte 72 en saillie radiale sur la périphérie extérieure de ladite couronne 70 ;
- une fente 73 ménagée sur la couronne 70 et délimitée par deux sectionnements 74 en regard ; et
- des moyens d'ouverture du circlips 7 pour qu'un opérateur puisse, à l'aide notamment d'un outil, écarter la fente 73 en éloignant les deux sectionnements 74 l'un de l'autre, comme illustré par les flèches O de la figure 3.

Les faces inférieures des pattes en saillie 72 sont destinées à venir en appui sur la face supérieure 12 de la caisse 1 et l'épaulement 71 est destiné à venir en appui contre le rebord de butée supérieure 62 de la coupelle de fixation 6. Comme représenté en figure 2, les faces inférieures de la couronne 70 et des pattes en saillie 72 sont couvertes d'un revêtement 77 en matériau élastique, notamment en caoutchouc, permettant d'assurer un contact sans jeu au niveau des points d'appui inférieur et supérieur de la coupelle de fixation 6. Ce revêtement 77 peut également comprendre des bourrelets 78 en saillie, de forme générale cylindrique et espacés régulièrement. Ce revêtement 77 peut également couvrir les faces supérieures de la couronne 70 et des pattes en saillie 72, de sorte que l'organe formant circlips 7 soit symétrique et que l'opérateur n'ait pas à positionner ledit organe 7 en fonction dudit revêtement 77.

Les moyens d'ouverture comprennent par exemple :
- deux orifices 75 ménagées sur la paroi supérieure de la couronne 70, de part et d'autre de la fente 73 ; et/ou
- deux languettes 76 en saillie radiale sur la périphérie extérieure de la couronne 70, disposées de part et d'autre de la fente 73.

Le dispositif permet ainsi un montage et un démontage simples de l'amortisseur de suspension 2. Dans un premier temps, la bride est rapportée et fixée sur l'extrémité supérieure de la tige 21 de l'amortisseur de suspension 2. Dans un deuxième temps, le montage du circlips 7 entre la caisse 1 et la coupelle de fixation 6 s'effectue dans un plan transversal à l'amortisseur de suspension 2, dans une direction sensiblement normale à l'axe dudit amortisseur, comme illustré par la flèche M de la figure 3. Un opérateur peut effectuer cette opération sans visibilité, c'est-à-dire en aveugle, en cas d'encombrement au-dessus de l'ouverture 10 de la caisse 1. L'organe formant circlips 7 est préférentiellement symétrique, de sorte à faciliter un tel montage en aveugle.

L'ouverture 10 de la caisse 1 est préférentiellement de forme circulaire d'axe BX sensiblement parallèle à l'axe AX de l'amortisseur de suspension 2 ; les deux axes AX et BX pouvant être confondus. L'axe AX de l'amortisseur 2 est confondu avec l'axe de révolution du corps 60 de la coupelle de fixation 6, de sorte que positionner ladite coupelle de fixation 6 par rapport à l'ouverture 10 revient à positionner l'axe AX par rapport à l'axe BX, et donc à positionner ledit amortisseur 2 par rapport à la caisse 1.

Afin d'assurer le positionnement de la coupelle de fixation 6 par rapport à l'ouverture 10, le rebord de butée inférieure 61 comprend trois parties :
- une partie plane 610 destinée à venir en appui contre la face inférieure 11 de la caisse 1 ;
- une partie bombée 611 destinée à assurer le positionnement de ladite coupelle 6 par rapport à l'ouverture de la caisse 1 ;
- une partie intermédiaire 612 reliant la partie bombée 611 à la paroi latérale 60.

La partie bombée 611 vient en butée contre une paroi 13 de la caisse 1 de forme complémentaire, par l'intermédiaire d'une masse 613 en matériau élastique, par exemple en élastomère. De la sorte, la caisse 1 présente une paroi bombée 13 formant une coupole dont le sommet comporte une ouverture 10. Pour avoir une plus grande surface d'appui de l'organe formant circlips 7 sur la caisse 1, le sommet de la coupole 11 présente une partie plane sensiblement parallèle à la partie plane 610 du rebord de butée inférieure 61.

La partie bombée 611 présente une section transversale de forme générale non limitative circulaire, ellipsoïdale, pyramidale à n côtés ; les formes non circulaires favorisant la mise en place et le positionnement radiale automatique de la coupelle de fixation 6 et donc de l'amortisseur 2 sur la caisse 1.

La forme de la coupole 611 du rebord de butée inférieure 61 assure donc le positionnement de l'axe BX par rapport à l'axe AX. Dans l'exemple illustré en figure 1, la coupole 611 n'est pas symétrique et donc les axes BX et AX ne sont pas confondus.

Les pattes 72 de l'organe formant circlips 7 permettent une mise en appui dudit organe 7 sur la caisse 1 quelle que soit la position respective des deux axes AX, BX. Cet organe 7 est donc indépendant de la forme de la coupelle de fixation 6 et donc du positionnement de l'amortisseur 2.

Dans un mode de réalisation particulier, le rebord de butée supérieure 62 de la coupelle de fixation 6 est solidaire d'une couronne 8 en matériau approprié, du type matériau présentant une qualité de revêtement glissant, qui recouvre, par exemple par surmoulage, ledit rebord 62 sur toute sa périphérie.

Cette couronne 8 est destinée à faciliter le montage de l'amortisseur 2. En effet, lors d'un montage en automatique de l'amortisseur 2, le dispositif de fixation arrive par-dessous avec ledit amortisseur 2 et ne passe pas forcément directement par l'ouverture 10. Ainsi le rebord de butée supérieure 62 peut venir cogner contre la caisse 1. Cette couronne 8 permet le glissement du dispositif de fixation sur la face inférieure 11 de la caisse 1, jusqu'au passage du dispositif à travers l'ouverture 10 et la mise en appui de la coupole 611, via la masse élastique 613, et de la partie plane 610 contre la face inférieure 11 de la caisse 1.

Avantageusement, la couronne 8 recouvre la face inférieure du rebord de butée supérieure 62, en regard du circlips 7, de sorte à faciliter le montage dudit circlips 7. La couronne 8 présente sur cette face inférieure une pente orientée vers la base dudit rebord de butée supérieur 62, de sorte à faciliter le positionnement du circlips 7 ; ledit circlips 7 présentant également une pente sur son bord intérieur apte à coopérer avec la pente de la couronne 8 pour améliorer le blocage du circlips 7.

Bien entendu l'exemple de mise en oeuvre évoqué ci-dessus ne présente aucun caractère limitatif et d'autres détails et améliorations peuvent être apportés au dispositif selon l'invention, sans pour autant sortir du cadre de l'invention où d'autres moyens de fixation de l'amortisseur sur l'armature interne 3 et d'autres moyens d'appui du ressort 22 sur le dispositif de fixation peuvent être réalisées.

## Revendications

1. Dispositif de fixation d'un amortisseur de suspension (2) sur la caisse (1) d'un véhicule, comprenant une bride (3, 4, 5, 6) fixée à l'extrémité supérieure de l'amortisseur (2) qui comprend un corps (60) destinée à s'engager partiellement dans une ouverture (10) ménagée dans la caisse (1) et un rebord de butée inférieure (61) destiné à venir en appui contre la face inférieure (11) de la caisse (1) bordant ladite ouverture (10), et un organe de blocage (7) amovible et apte à coopérer avec ledit corps (60) pour maintenir fixe la bride (3, 4, 5, 6) sur la caisse (1) en venant en appui contre la face supérieure (12) de la caisse (1) bordant l'ouverture (10), **caractérisé en ce que** l'organe de blocage (7) comprend une couronne (70) sur laquelle est ménagée une fente (72) adaptée pour permettre le montage de l'organe de blocage (7) dans un plan transversal à l'amortisseur.

2. Dispositif selon la revendication 1, **caractérisé en ce que** l'organe de blocage (7) est élastiquement déformable, de sorte que lors de son montage, la fente (72) s'écarte pour permettre à la couronne (70) de s'engager autour du corps de la bride.

3. Dispositif selon la revendication 1 ou 2, **caractérisé en ce que** la bride (3, 4, 5, 6) comporte un rebord de butée supérieure (62) saillant vers l'extérieur du corps (60), l'organe de blocage (7) étant destiné à être interposé entre ledit rebord de butée supérieure (62) et la face supérieure (11) de la caisse (1).

4. Dispositif selon l'une quelconque des revendications 1 à 3, **caractérisé en ce que** la bride (3, 4, 5, 6) comporte une armature intérieure (3) fixée à l'extrémité supérieure de l'amortisseur (2) et une armature extérieure (4) reliée à l'armature intérieure (3) et ayant une surface latérale qui entoure l'armature intérieure (3), l'armature extérieure (4) comprenant un organe de fixation (6), ledit organe de fixation (60) comportant le corps (60) de forme cylindrique terminée à l'une de ses extrémités par le rebord de butée inférieure (61) saillant vers l'extérieur dudit corps (60).

5. Dispositif selon l'une quelconque des revendications 1 à 4, **caractérisé en ce que** le rebord de butée inférieure (61) comprend une partie plane (610) destinée à venir en appui sur la face inférieure (11) de la caisse (1) et une partie bombée (611) destinée à assurer le positionnement de la bride (3, 4, 5, 6) par rapport à l'ouverture (10) de la caisse (1).

6. Dispositif selon la revendication 5, **caractérisé en ce que** la partie bombée (611) du rebord de butée inférieure (61) vient en butée contre une paroi (13) de la caisse (1) de forme complémentaire, par l'intermédiaire d'une masse (613) en matériau élastique.

7. Dispositif selon la revendication 6, **caractérisé en ce que** la partie bombée (611) du rebord de butée inférieure (61) présente une section transversale de forme générale circulaire ou ellipsoïdale ou pyramidale à n côtés.

8. Dispositif selon l'une quelconque des revendications 3 à 7 en dépendance de la revendication 3, **caractérisé en ce que** le rebord de butée supérieure (62) de la bride (6) est solidaire d'une couronne (8) en matériau présentant une qualité de revêtement glissant.

9. Dispositif selon la revendication 8, **caractérisé en ce que** la couronne (8) recouvre le rebord de butée supérieure (62) de la coupelle de fixation (6) par surmoulage.

10. Dispositif selon l'une quelconque des revendications précédentes, **caractérisé en ce que** l'organe de blocage (7) est partiellement couvert d'un revêtement (77) en matériau élastique afin d'assurer un blocage sans jeu de l'organe de fixation (6).

11. Dispositif selon l'une quelconque des revendications précédentes, **caractérisé en ce que** l'organe de blocage (7) comprend au moins une patte (72) en saillie radiale sur la périphérie extérieure de ladite couronne (70).
